(19) Europäisches Patentamt
European Patent Office
Office européen des brevets

(11) Veröffentlichungsnummer: **0 133 688**
**A2**

(12) # EUROPÄISCHE PATENTANMELDUNG

(21) Anmeldenummer: **84109192.9**

(22) Anmeldetag: **02.08.84**

(51) Int. Cl.[4]: **G 02 C 5/00**
G 02 C 11/04

(30) Priorität: **02.08.83 DE 3327890**

(43) Veröffentlichungstag der Anmeldung:
**06.03.85 Patentblatt 85/10**

(84) Benannte Vertragsstaaten:
**AT BE CH DE FR GB IT LI LU NL SE**

(71) Anmelder: **Optische Werke G. Rodenstock**
**Isartalstrasse 43**
**D-8000 München 5(DE)**

(72) Erfinder: **Ziehm, Friedolf**
**Bitterstrasse 13**
**D-1000 Berlin 33(DE)**

(72) Erfinder: **Effer, Erhard**
**Ministerhügel 6**
**D-8134 Pöcking(DE)**

(72) Erfinder: **Melzig, Manfred, Dr.**
**Sonnenstrasse 11**
**D-8031 Wessling(DE)**

(72) Erfinder: **Martinuzzi, Guiseppe**
**Wendelsteinerstrasse 4**
**D-8031 Eichenau(DE)**

(74) Vertreter: **Schiller, Walter, Dr.**
**Willibaldstrasse 36**
**D-8000 München 21(DE)**

(54) **Phototrope Brillenfassung.**

(57) Beschrieben wird eine Brillenfassung, in deren Fassungsmaterial oder auf deren Fassungsmaterial eine phototrope Substanz ein- bzw. aufgebracht ist. Die phototrope Substanz oder auch mehrere verschiedene phototrope Substanzen können homogen, graduell und/oder partiell verteilt sein.

Die phototrope Substanz kann dabei vorteilhafterweise ein organisches Material oder ein kleinstgemahlenes an sich bekanntes phototropes Silikatglas sein.

EP 0 133 688 A2

Beschreibung

Die Erfindung bezieht sich auf eine Brillenfassung gemäß dem Oberbegriff eines der Ansprüche 1 bis 3.

Phototrope Materialien, d.h. Materialien, deren Einfärbung sich entsprechend der Umgebungsbeleuchtung in Intensität und Farbeindruck verändert, sind bekannt. Derartige Materialien sind bislang aber nur für Brillengläser und nicht für Brillenfassungen verwendet worden.

Der Erfindung liegt die Aufgabe zugrunde, eine Brillenfassung zu schaffen, deren Einfärbung sich entsprechend der Umgebungsbeleuchtung ändert.

Diese Aufgabe wird ausgehend von Brillenfassungen gemäß dem Oberbegriff der Patentansprüche 1 bis 3 durch die in den kennzeichnenden Teilen dieser Patentansprüche angegebenen Merkmale gelöst.

Durch das Ein- bzw. Aufbringen mindestens einer phototropen Substanz in bzw. auf das Fassungsmaterial kann insbesondere bei aus Kunststoffen bestehenden Fassungsmaterialien durch die verstärkte Absorption der UV-Strahlen in den obersten Schichten die Lebensdauer des Fassungsmaterials erhöht werden. Ferner wird ein verbesserter Schutz gegen störende Lichteinleitung in das Auge über das Fassungsmaterial erzielt sowie Lichtreflexe an Metallteilen in der Fassung unterdrückt.

Darüberhinaus lassen sich durch die entsprechend der Umgebungsbeleuchtung ändernde Einfärbung insbesondere bei modischen Brillenfassungen interessante ästhetische Effekte erzielen. Die ästhetischen Effekte können dadurch gesteigert

werden, daß mehrere phototrope Substanzen, die eine hinsichtlich Farbe und Intensität unterschiedliche Wirkung bei Lichteinfall haben, ein- bzw. aufgebracht werden.

Weiterbildungen der Erfindung sind in den Ansprüchen 4 f. angegeben.

Die Brillenfassung kann nach Anspruch 4 homogen mit dem phototropen Material eingefärbt sein. Daneben ist es natürlich auch möglich, gemäß Anspruch 5 die phototrope Substanz nur über Teile der Brillenfassung, beispielsweise die die Brillengläser umgebenden Teile oder die Bügel zu verteilen oder die phototrope Substanz bzw. die phototropen Substanzen graduell verlaufend ein- bzw. aufzubringen.

Ferner ist auch die Verwendung spezieller Applikationstechniken möglich.

Das Auf- bzw. Einbringen der phototropen Substanzen kann in beliebiger Weise, beispielsweise durch Tauchen, Spritzen, Sprühen etc. erfolgen. Die phototropen Substanzen können in den Lack vor dem Aushärten des Lackes eingemischt werden, der auf das Fassungsmaterial zu dessen Schutz aufgebracht wird. Ferner können die phototrope Substanz bzw. die phototropen Substanzen auch nach dem teilweisen oder vollständigen Aushärten des Lacks in diesen eingebracht werden (Ansprüche 7 bzw. 8).

Der Lack kann beispielsweise ein handelsüblicher Polyurethan- oder Epoxidlack sein (Anspruch 9).

Für die erfindungsgemäße phototrope Fassung können bekannte phototrope Farbstoffe verwendet werden, beispielswseise Benzospiropyrane mit der allgemeinen Formel

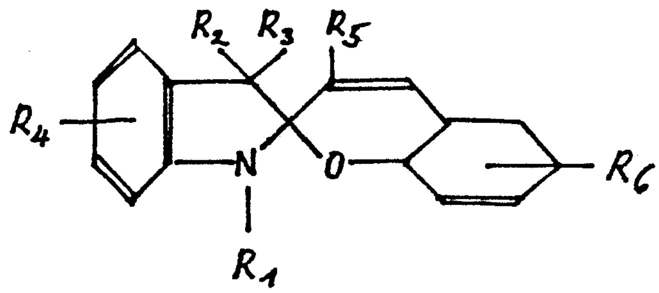

Verschiedene derartige Verbindungen und Verfahren zu ihrer Herstellung sind in der US-PS 2 953 454 oder der US-PS 3 022 318 beschrieben.

Ferner können Spironaphthoxazine mit der allgemeinen Formel

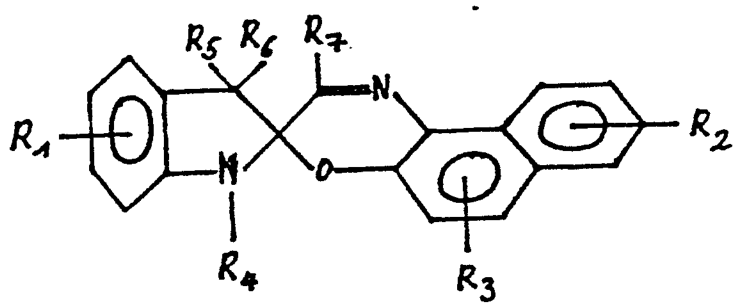

verwendet werden. Verfahren zur Herstellung derartiger Verbindungen sind beispielsweise in den US-PSen 3 562 172 und 3 578 602 oder der DE-OS 29 26 255 beschrieben.

Besonders vorteilhaft ist es jedoch, eine phototrope Verbindung mit der im Anspruch 11 angegebenen Formel zu verwenden, da derartige phototrope Verbindungen hinsichtlich des "Hubs" des phototropen Effekts und der Lebensdauer bekannten phototropen Verbindungen überlegen sind.

Weiter ist es besonders vorteilhaft, als phototrope Substanz vermahlenes handelsübliches phototropes Silikatglas, d.h. mit Silberhalogeniden dotiertes Silikatglas zu verwenden. Derartige Silikatgläser werden beispielsweise von der Firma Corning unter dem Namen Photobraun Extra oder Photogray Extra oder von der Firma DESAG unter dem Namen Photosolar

Superbraun vertrieben. Besonders vorteilhaft ist es jedoch, hochdotierte Silikatgläser, wie sie beispielsweise in der US-PS 4 358 542 beschrieben sind, zu verwenden.

Die Silikatgläser werden in der Kugelmühle auf Korngrößen von einigen µm kleinstgemahlen und beispielsweise in den Lack gemischt, der auf die Brillenfassung aufgebracht und dann in üblicher Weise ausgehärtet wird.

Die ästhetische Wirkung einer partiellen und/oder graduell verlaufenden phototropen Einfärbung kann durch eine zusätzliche Einfärbung der Fassung mittels anderer Substanzen oder sonstiger Einfärbungsmethoden nach Anspruch 14 verstärkt werden. Natürlich ist eine zusätzliche von der Umgebungsbeleuchtung unabhängige Einfärbung auch bei homogener Verteilung der phototropen Substanzen möglich.

Zwei Ausführungsbeispiele der Erfindung werden im folgenden beschrieben:

**Beispiel 1**

2g 1,3,3-Trimethyl-5-fluoromethyl-spiro[indoline-2,3-[3.4]-naphtho [2,1-6] - 1,4-oxazine] werden in 55g Verdünner 62 der Fa.Mankiewicz, Hamburg gelöst und in einen Polyurethanlackansatz, bestehend aus 34g Lack und 11,3g Härter (Alexit L 3:1 der Fa. Mankiewicz) eingerührt.

Großflächige photochrome bzw. phototrope Einfärbungen können dadurch erzielt werden, daß die Fassungsteile in dieses Bad getaucht werden. Anschließend läßt man die Lösungsmittelanteile ca. 10 Minuten bei Raumtemperatur abdunsten und härtet den Lack dann inert 30 Minuten in einem Umluft-Trokkenofen bei 60° C aus.

Kleinflächige phototrope Einfärbungen, z.B. Beschriftungen, geometrische Figuren usw. werden am besten in einem Masken-Spray-Verfahren mit dem oben genannten Lackansatz aufgebracht. Die Nachbehandlung und Härtung erfolgt wie beim Tauchlackieren.

Zur Verlängerung der Lebensdauer des phototropen Effekts empfiehlt sich eine spezielle Schutzlackierung:

Zu diesem Zweck wird ein Lackansatz aus 2g UV-Absorber "Cyasorb 1988" (American Cyanamid Corp., USA), 34g Lack und 11,3g Härter (Alexit L 3:1 der Fa. Mankiewicz) angesetzt und mittels Tauchlackierens oder eines Sprayverfahrens auf die mit einem phototropen Lack überzogenen Fassungsteile aufgebracht.

Längerwellig absorbierende UV-Absorber, wie "Cyasorb 5411" (American Cyanamid Corp.) oder "Tinuvin P" (Ciba-Geigy, Schweiz) können als Schutzlack-UV-Absorber nicht verwendet werden, da diese bereits große Teile der Anregungsstrahlung der phototropen Substanzen selbst absorbieren und damit den phototropen Effekt stark abschwächen.

Die so erzielten blau-blauvioletten Farbtöne lassen sich durch eine entsprechende Grundfärbung des Fassungsmaterials, die in bekannter Weise erzeugt wird, oder durch Zusatz weiterer nicht phototroper Farbstoffe in den Farblackansatz verändern.

Beispielsweise ergeben gelbe Grundtönungen bzw. Zusatzfarbstoffe eine grüne Einfärbung unter Lichteinwirkung, während orange Grundtönungen bzw. Zusatzfarbstoffe braune Einfärbungen unter Lichteinwirkung erzeugen.

## Beispiel 2

Wie bereits erwähnt, werden phototrope Silikatgläser, die erfindungsgemäß verwendet werden können, beispielsweise von der Fa. Corning Glas-Werke unter dem Namen "Photobraun extra" vertrieben; die Zusammensetzung dieses Glasmaterials ist beispielsweise in der US-PS 4 190 451 beschrieben.

Braune phototrope Silikatgläser werden beispielsweise von der Fa. Pilkington Brothers unter dem Namen "Reactolite Rapide" vertrieben; derartige Gläser sind beispielsweise in der US-PS 4 349 634 beschrieben; ferner sind in den US-PSen 4 290 794, 4 118 214 und 3 920 463 sich in weiteren Farben einfärbende phototrope Silikatgläser beschrieben.

Besonders vorteilhaft ist es jedoch, wenn für die erfindungsgemäße phototrope Fassung phototrope Materialien verwendet werden, die sich bezogen auf eine bestimmte Dicke stärker verdunkeln als die vorstehend genannten phototropen Gläser. Derartige Materialien werden beispielsweise in einem phototropen Verbundglas verwendet, das von der Fa. Essilor S.A., Frankreich unter dem Namen Essilor CS vertrieben wird.

Das phototrope Glas wird in Stücke von ca. 5 mm Durchmesser zerkleinert und in einer Kugelmühle aus Achat (Pulverisette der Fa. Fritsch, Deutschland) zu einem Pulver zermahlen. Die Korngröße liegt zwischen 5 und 7 µm.

KANZLEI
MÜNICH & SCHILLER

DIPL.-PHYSIKER
DR. WILHELM MÜNICH PATENTANWALT
DR. WALTER SCHILLER RECHTSANWALT

0133688

WILLIBALDSTR. 36 · D 8000 MÜNCHEN 21
TEL.: 089/580 80 49 · TELEX: 528464 WMUEN D

UNSER ZEICHEN:

Optische Werke G. Rodenstock

Isartalstr. 43
8000 München 5

---

Phototrope Brillenfassung

---

P a t e n t a n s p r ü c h e

1. Brillenfassung aus Kunststoff,
dadurch gekennzeichnet , daß in das Fassungsmaterial zumindest teilweise mindestens eine phototrope Substanz eingebracht ist.

2. Brillenfassung aus Kunststoff,
dadurch gekennzeichnet , daß auf das Fassungsmaterial zumindest teilweise mindestens eine phototrope Substanz aufgebracht ist.

3. Brillenfassung aus Kunststoff oder Metall mit einer Lack-Beschichtung,

dadurch gekennzeichnet , daß der Lack zumindest teilweise mindestens eine phototrope Substanz enthält.

4. Brillenfassung nach einem der Ansprüche 1 bis 3, dadurch gekennzeichnet , daß die phototrope Substanz oder Substanzen homogen verteilt sind.

5. Brillenfassung nach einem der Ansprüche 1 bis 3, dadurch gekennzeichnet , daß die phototrope Substanz oder Substanzen graduell verlaufend und/oder partiell verteilt sind.

6. Brillenfassung nach einem der Ansprüche 1 bis 5, dadurch gekennzeichnet , daß die phototrope Substanz oder Substanzen durch Tauchen, Spritzen, Sprühen, Drucken oder Pinseln ein- bzw. aufgebracht ist.

7. Brillenfassung nach einem der Ansprüche 3 bis 5, dadurch gekennzeichnet , daß die phototrope Substanz oder Substanzen vor dem Aufbringen des Lacks auf die Fassung in den Lack gemischt ist.

8. Brillenfassung nach einem der Ansprüche 3 bis 5, dadurch gekennzeichnet , daß die phototrope Substanz oder Substanzen in den Lack nach dessen vollständigen oder teilweisen Aushärten eingebracht sind.

9. Brillenfassung nach Anspruch 7 oder 8, dadurch gekennzeichnet , daß der Lack ein handelsüblicher Epoxid- oder Polyurethanlack ist.

10. Brillenfassung nach einem der Ansprüche 1 bis 9, dadurch gekennzeichnet , daß die phototrope Substanz eine phototrope organische Verbindung ist.

11. Brillenfassung nach Anspruch 10, dadurch **gekennzeichnet**, daß die phototrope Substanz eine Verbindung der allgemeinen Formel

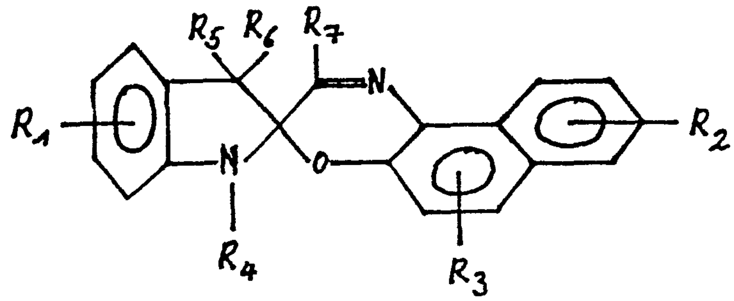

ist, worin die Reste R bedeuten:

$R_1$, $R_2$, $R_3$ einen oder mehrere Substituenten aus der Reihe -H; -CN, -SCN, $-NO_2$, -X, $-CH_2X$, $-CX_3$ (X=Halogen), -OR, -SR, -COR, -COOR (R=H, Alkyl mit bis zu 8 C-Atomen, Aryl, Heteroaryl), > Ar (annelierte aromatische oder heteroaromatische Ringsysteme)

$R_4$, $R_5$, $R_6$, $R_7$, ein Substituent aus der Reihe -H, -R, $-CH_2R$, $-NH_2$, -NHR, $-NR_2$, -OR, -SR (R=Alkylrest mit bis zu 8 C-Atomen, Aryl oder Heteroarylrest), wobei mindestens einer der Reste $R_4$, $R_5$, $R_6$ nicht Methyl ist, falls $R_7$=H ist.

12. Brillenfassung nach einem der Ansprüche 3 bis 9, dadurch **gekennzeichnet**, daß die phototrope Substanz ein gemahlenes handelsübliches phototropes Silikatglas ist.

13. Brillenfassung nach einem der Ansprüche 1 bis 12, dadurch **gekennzeichnet**, daß in den Lack ein ultraviolette Strahlung absorbierendes Material eingebracht ist.

14. Brillenfassung nach einem der Ansprüche 1 bis 13, dadurch **gekennzeichnet** , daß das Fassungsmaterial zusätzlich in an sich bekannter Weise unabhängig von der Umgebungsbeleuchtung eingefärbt ist.